# EUROPÄISCHE PATENTSCHRIFT

(11) **EP 2 531 710 B1**
(45) Veröffentlichungstag und Bekanntmachung des Hinweises auf die Patenterteilung: **15.04.2015**
(21) Anmeldenummer: 11701226.0
(22) Anmeldetag: 18.01.2011
(51) Int. Cl.: F02D 13/06, F02D 17/02, F01N 13/10, F02B 29/04, F02M 35/12, F02D 9/04

(54) **BRENNKRAFTMASCHINE MIT ZYLINDERABSCHALTUNG**
INTERNAL COMBUSTION ENGINE HAVING CYLINDER DEACTIVATION
MOTEUR À COMBUSTION INTERNE À COUPURE DE CYLINDRE

(30) Priorität: 04.02.2010 AT 1562010
(43) Veröffentlichungstag der Anmeldung: 12.12.2012
(73) Patentinhaber: AVL List GmbH, 8020 Graz (AT)
(72) Erfinder: GRAF, Bernhard, A-8045 Graz (AT); KAPUS, Paul, A-8111 Judendorf (AT)
(74) Vertreter: Babeluk, Michael
(86) Internationale Anmeldenummer: PCT/EP2011/050591
(87) Internationale Veröffentlichungsnummer: WO 2011/095390

(56) Entgegenhaltungen:
- EP-A2- 1 936 605
- DE-A1- 10 116 169
- DE-A1- 19 704 376
- DE-A1-102008 008 532
- DE-U1-202007 015 940
- GB-A- 2 423 794
- JP-A- 2005 299 505
- JP-A- 2006 342 695

## Beschreibung

Die Erfindung betrifft eine Brennkraftmaschine mit zumindest zwei Zylindern oder zumindest zwei Gruppen von Zylindern, von denen zumindest einer elektronisch abschaltbar ist, mit zumindest einem Einlassstrang und zumindest einem Auslassstrang. Weiters betrifft die Erfindung ein Verfahren zum Betreiben einer Brennkraftmaschine mit zumindest zwei Zylindern oder zumindest zwei Gruppen von Zylindern, von denen zumindest einer in zumindest einem Motorbetriebsbereich abgeschaltet wird.

Die EP 1 564 384 offenbart ein Antriebssystem mit einer Brennkraftmaschine mit mehreren abschaltbaren Zylindern. Die Brennkraftmaschine weist einen Schalldämpfer mit einem Ventil auf, welches über einen elektronischen Aktuator ansteuerbar ist, wobei das Ventil zwischen einer offenen Stellung und einer geschlossenen Stellung umschaltbar ist. Die offene Stellung entspricht dabei einem V-8-Modus und die geschlossene Stellung einem 4-Reihenzylinder-Modus. Ähnliche Veröffentlichungen einer die Schallabstrahlung beeinflussenden Abgasklappe im Abgasstrang einer Brennkraftmaschine mit abschaltbaren Zylindern sind aus den Veröffentlichungen EP 1 561 917 A1 und DE 10 2004/046184 A1 bekannt.

Weiters beschreibt die US 2003/066503 A eine Brennkraftmaschine mit zwei Gruppen von Zylindern, welche jeweils mit einem Einlassstrang verbunden sind. Jeder Einlassstrang weist einen Einlasssammler auf, wobei jeder Einlasssammler jeweils über eine Drosselklappe mit einem Einlassstutzen verbunden ist. In einem Betriebsbereich, in welchem die Zylinder der zweiten Gruppe abgeschaltet sind, wird Luft über die erste Drosselklappe dem ersten Einlasssammler zugeführt. Wird mehr Leistung angefordert, so kann die zweite Zylinderbank aktiviert werden, wobei Luft über die zweite Drosselklappe dem zweiten Einlasssammler zugeführt wird. Die beiden Einlassstränge sind dabei so ausgelegt, dass im Betrieb mit allen Zylindern eine teilweise Auslöschung der Ansauggeräusche erfolgt, sodass die Schallabstrahlung im Betrieb mit allen Zylindern etwa der Schallabstrahlung im Betrieb mit teilweise abgeschalteten Zylindern entspricht.

Aus der AT 502 872 A2 ist ein Verfahren zum Absenken der Reibleistung im Teillastbetrieb einer Brennkraftmaschine mit zumindest zwei Zylindergruppen bekannt, wobei im Teillastbetrieb die Zylinder zumindest einer Zylindergruppe durch Abschalten der Einspritzung deaktiviert und reibleistungsminimal betrieben werden und wobei die Zylinder zumindest einer zweiten Zylindergruppe wirkungsgradoptimal motorisch betrieben werden. Die Abschaltung der Zylinder wird dabei elektronisch gesteuert.

Die JP 2005-299 505 beschreibt eine Brennkraftmaschine mit zwei Gruppen von V-förmig angeordneten Zylindern. Eine hydraulische Einrichtung ist zur Abschaltung der Zylinder vorgesehen. Über Lautsprecher werden Audiosignale in den Innenraum des Fahrzeuges eingeleitet.

Die DE 10 116 169 A1 beschreibt eine Schallübertragungsvorrichtung für ein Kraftfahrzeug zur gezielten Schallübertragung von einem Ansaugtrakt einer Brennkraftmaschine zu einem Innenraum des Kraftfahrzeuges, mit einer hohlen Übertragungsleitung, die mit einem Eingangsende mit dem Ansaugtrakt kommunizierend verbunden ist. Die hohle Übertragungsleitung strahlt am Ausgangsende den Schall zum Fahrzeuginnenraum ab und weist eine schwingungsfähige Membran auf.

Die DE 20 2007 015 940 U1 behandelt eine Vorrichtung zur Geräuschübertragung in einem Kraftfahrzeug mit Brennkraftmaschine, mit einer Schwingungseinheit, der über eine Kommunikationsleitung der Druck aus dem Ansaugtrakt der Brennkraftmaschine zuführbar ist, und die mit dem Fahrgastraum des Kraftfahrzeugs in Verbindung steht. Ein den Querschnitt der Kommunikationsleitung einstellendes Ventil ist dabei vorgesehen, wobei die Stellung des Ventilgliedes über den Druck im Ansaugtrakt einstellbar ist.

Die DE 19 704 376 A1 zeigt eine akustische Verbindung zwischen der Luftfilteranordnung eines Verbrennungsmotors, eines Kraftfahrzeuges und dem Innenraum des Kraftfahrzeuges, damit der Fahrer bei einem geräuscharmen Fahrzeug eine akustische Information über den Betriebszustand des Motors erhält.

Die GB 2 423 794 A beschreibt eine Brennkraftmaschine, bei der eine Gruppe von Zylindern abgeschaltet werden kann, indem die Kraftstoffzufuhr zu einzelnen Zylindern gestoppt wird. Die Einlass- und Auslassventile werden dabei weiterhin normal weiter betätigt.

Bei der Zylinderabschaltung bei einer Brennkraftmaschine mit zum Beispiel sechs V-förmig angeordneten Zylindern läuft der Motor während der Abschaltung von zum Beispiel einer Zylinderbank im Teillastbereich nur mit drei Zylindern. Das hat zur Folge, dass aufgrund der drei fehlenden Zündungen (bezogen auf 720° Kurbelwellenumdrehung) der Geräuschcharakter eines Drei-Zylinder-Motors entsteht. Dies ist jedoch in Oberklassefahrzeugen nicht erwünscht und teilweise ein Kriterium gegen einen Fahrzeugkauf.

Aufgabe der Erfindung ist es, diesen Nachteil zu vermeiden und das Innenraumgeräusch des Fahrzeuges bei einer Brennkraftmaschine der eingangs genannten Art zu verbessern.

Erfindungsgemäß wird dies dadurch erreicht dass zumindest ein Einlassstrang zumindest eines deaktivierten Zylinders über zumindest eine schallleitende Einrichtung mit einem Innenraum eines Fahrzeuges akustisch verbindbar ist, wobei zumindest der Zylinder der Brennkraftmaschine ohne Deaktivierung der Ein- und Auslassventile deaktivierbar ist.

Bei der mechanischen Zylinderabschaltung werden die Ein- und Auslassventile der abgeschalteten Zylinder deaktiviert. Dadurch ergibt sich sowohl auf der Einlassseite als auch auf der Auslassseite eine Änderung der Geräuschcharakteristik. Bei der rein elektronischen Zylinderabschaltung ohne Schließen der Ventile bleibt die Ansauggeräuschcharakteristik wegen der auch bei abgeschalteten Zylindern nahezu unveränderten Luftmasse im Abschaltbetrieb nahezu unverändert, wohingegen die Abgasakustik wegen der fehlenden Zündungen an den abgeschalteten Zylindern ihre Charakteristik ändert. Bei der vorliegenden Erfindung wird dieser Effekt der gleichbleibenden Ansaugakustik ausgenützt und verstärkt. Vorzugsweise ist vorgesehen, dass die schallleitende Einrichtung zumindest eine akustische Schalteinrichtung aufweist, mit welcher der Einlassstrang des zumindest einen deaktivierten Zylinders akustisch mit dem Innenraum des Fahrzeuges verbunden werden kann. Der Innenraum des Fahrzeuges kann über die schallleitende Einrichtung vom Einlassstrang akustisch getrennt werden, sobald der zumindest eine deaktivierte Zylinder wieder aktiviert wird.

Besonders vorteilhaft ist es, wenn die schallleitende Einrichtung vom Bereich einer Ansaugmündung des Einlasssammlers ausgeht.

Bei aufgeladenen Brennkraftmaschinen geht vorzugsweise die schallleitende Einrichtung vom Hochdruckteil des Einlassstranges stromabwärts eines Verdichters, vorzugsweise zwischen einem Ladeluftkühler und einem Einlasssammler aus.

Durch die beschriebenen Maßnahmen wird während der Zylinderabschaltung im Fahrzeuginnenraum der akustische Eindruck einer mit sämtlichen Zylindern arbeitenden Brennkraftmaschine generiert. Um dies zu erreichen, wird der Beitrag des Auspuffgeräusches im Fahrzeuginnenraum durch die Verwendung beider Endschalldämpfer-Volumina so gering wie möglich gehalten. Weiters kann das Auspuffmündungsgeräusch durch Drosselung gedämpft werden. Dabei wird ein Teil des freien Querschnittes der Abgasanlage einer oder beider Gruppen von Zylindern versperrt. Durch den kleineren, für den Volllastdurchsatz ausgelegten, Querschnitt sinkt das Mündungsgeräusch. Die Endschalldämpfer-Volumina können dabei mittels einer Abgasklappe geschalten werden. Zusätzlich werden die Druckpulse im Einlassstrang mittels der schallleitenden Einrichtung verstärkt für die Generierung des Innengeräusches herangezogen. Dies ist möglich, da die einlassseitigen Druckpulse durch die elektronisch gesteuerte Zylinderabschaltung nur sehr gering beeinflusst werden. Dabei wird auch in der abgeschalteten Zylinderbank Luft durchgesetzt. Durch den Einsatz der schallleitenden Einrichtung wird das Einlassgeräusch in den Bereich der Spritzwand bzw. in den Bereich des Fahrzeuginnenraums geleitet und gegebenenfalls in gewissen Frequenzbereichen sogar verstärkt.

Die schallleitende Einrichtung kann beispielsweise durch ein Schallrohr (Soundpipe) gebildet sein, welches beispielsweise im Bereich der Spritzwand des Fahrzeuges endet bzw. über eine Membran mit dem Innenraum des Fahrzeuges akustisch verbunden ist.

Die Erfindung wird im Folgenden anhand der Figuren näher erläutert. Es zeigen schematisch:
- Fig. 1: eine erfindungsgemäße Brennkraftmaschine in einer ersten Ausführungsvariante;
- Fig. 2: eine erfindungsgemäße Brennkraftmaschine in einer zweiten Ausführungsvariante;
- Fig. 3: eine erfindungsgemäße Brennkraftmaschine in einer dritten Ausführungsvariante;
- Fig. 4: eine erfindungsgemäße Brennkraftmaschine in einer vierten Ausführungsvariante; und
- Fig. 5: eine erfindungsgemäße Brennkraftmaschine in einer fünften Ausführungsvariante.

Funktionsgleiche Teile sind in den Ausführungsvarianten mit gleichen Bezugszeichen versehen.

Die Figuren zeigen schematisch jeweils eine Brennkraftmaschine 1 mit sechs Zylindern 4, welche in zwei Gruppen 2, 3 angeordnet sind, wobei jede der Gruppen 2, 3 mit einem Auslassstrang 7, 8 verbunden ist. In jedem Auslassstrang 7, 8 ist mindestens eine Abgasnachbehandlungseinrichtung 15a, 16a und zumindest ein Endschalldämpfer 15b, 16b angeordnet.

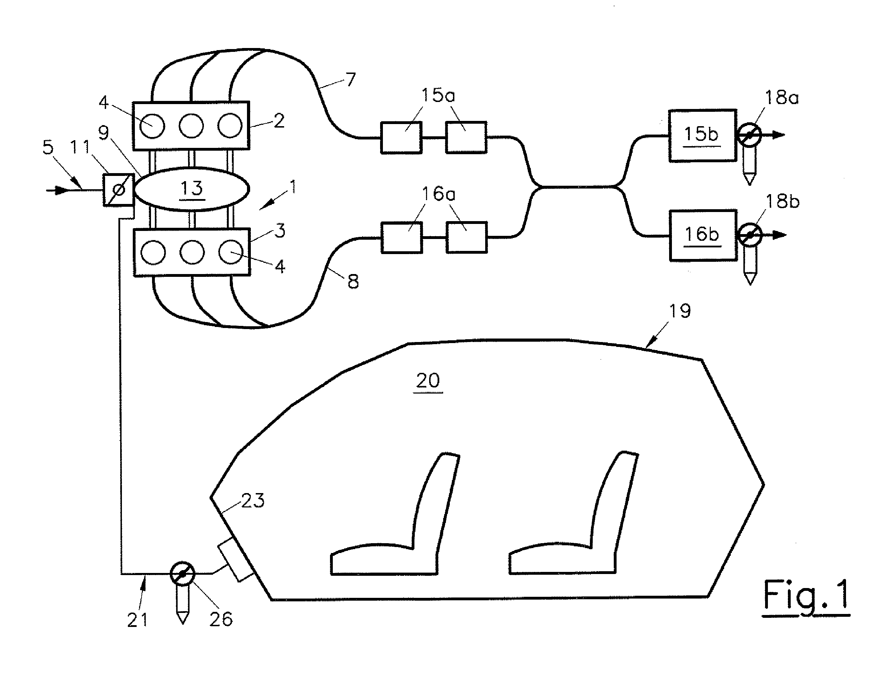

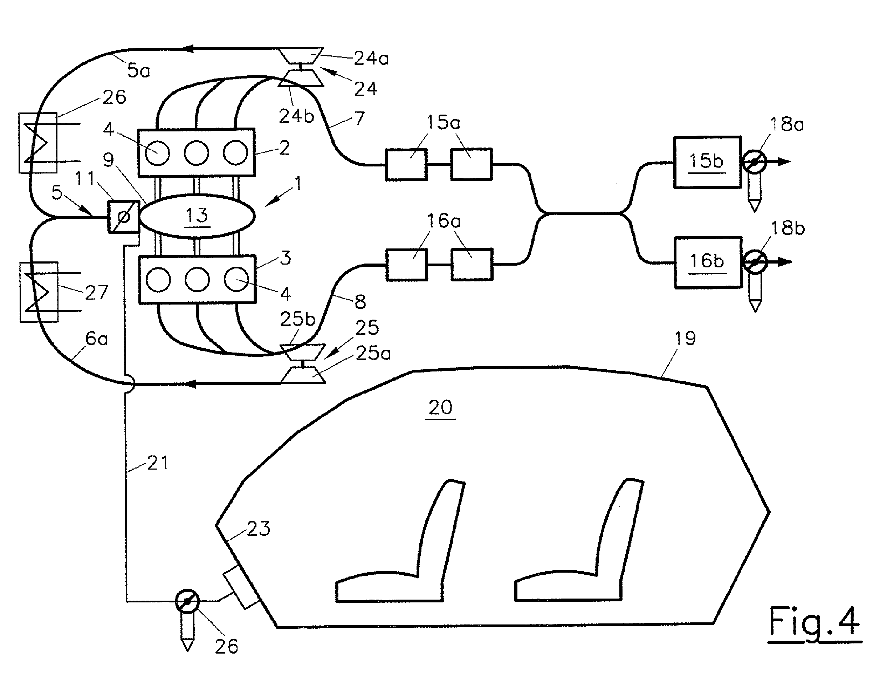

Die Fig. 1 und Fig. 4 zeigen Ausführungen, bei denen die Gruppen 2, 3 von Zylindern 4 mit einem einzigen Einlasssammler 13 eines Einlassstranges 5 verbunden sind.

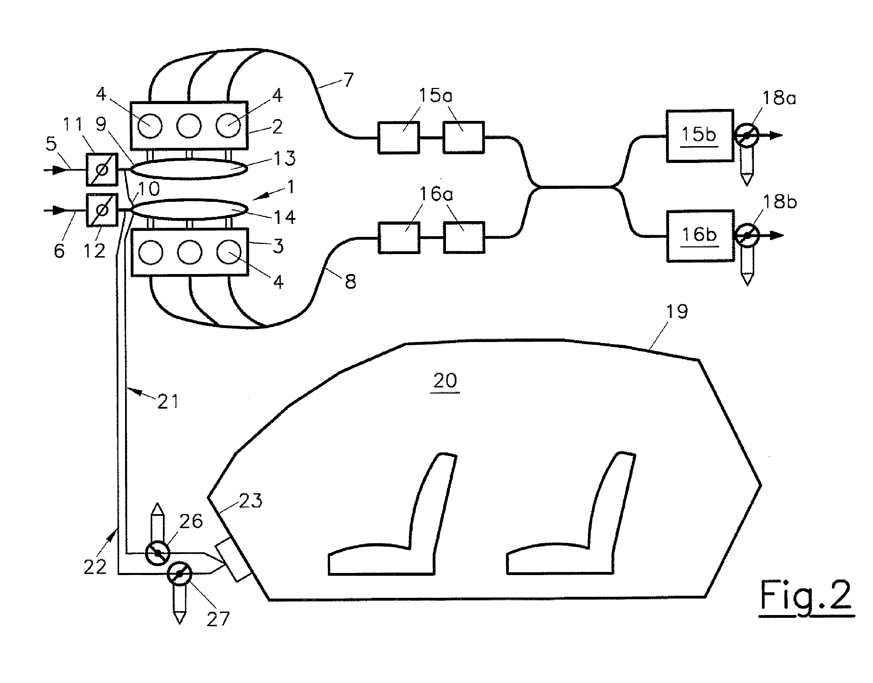

Dagegen ist bei den in den Fig. 2, Fig. 3 und Fig. 5 dargestellten Ausführungsvarianten jede Gruppe 2, 3 von Zylindern 4 mit jeweils einem Einlasssammler 13, 14 eines separaten Einlassstranges 5, 6 verbunden.

Um das Innenraumgeräusch eines Fahrzeuges zu verbessern, ist zumindest ein Einlassstrang 5, 6 über zumindest eine schallleitende Einrichtung 21, 22, beispielsweise ein Schallrohr, mit dem Innenraum 20 des Fahrzeuges 19 akustisch verbunden, wobei in den Ausführungsbeispielen die schallleitende Einrichtung 21, 22 im Bereich der Spritzwand 23 des Fahrzeuges 19 endet. Die schallleitende Einrichtung 21, 22 kann dabei eine akustische Schalteinrichtung 26, 27 aufweisen, mit welcher die akustische Verbindung zwischen Einlassstrang 5, 6 und Innenraum 20 des Fahrzeugs 19 wahlweise - bei teilweise deaktivierten Zylindern 4 - hergestellt oder - bei allen aktivierten Zylindern 4 - getrennt werden kann.

Die schallleitende Einrichtung 21, 22 geht dabei vorteilhafterweise von einem Bereich des Einlassstranges 5, 6 zwischen der Drosselklappe 11, 12, und dem Einlasssammler 13, 14, besonders vorteilhafterweise vom Bereich der Ansaugmündung 9, 10 des Einlasssammlers 13, 14, aus.

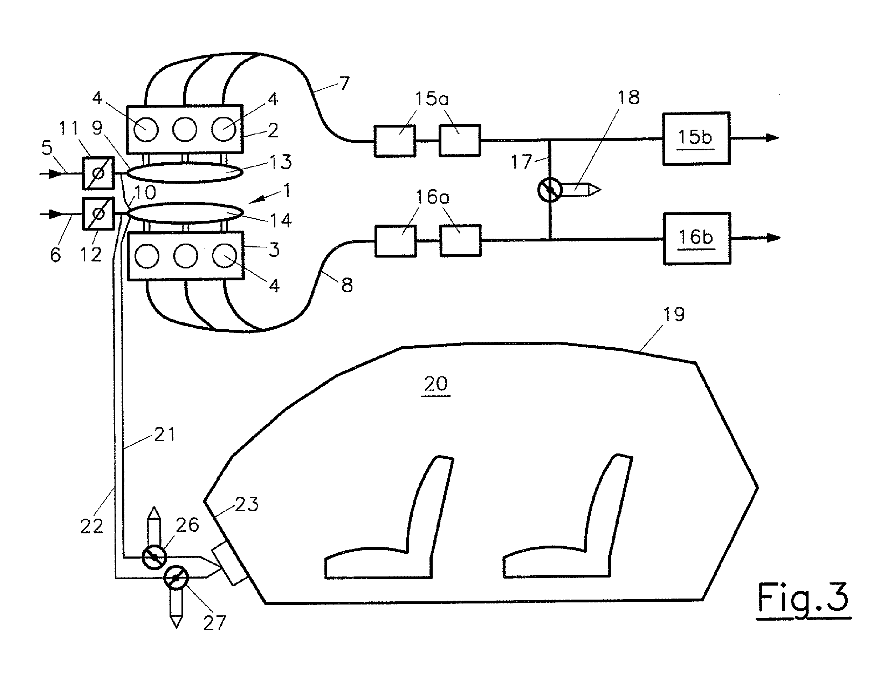

Während der Zylinderabschaltung wird durch die schallleitende Einrichtung 21, 22 im Innenraum 20 des Fahrzeuges 19 der akustische Eindruck einer mit sämtlichen Zylindern 4 arbeitenden Brennkraftmaschine 1 generiert. Um dies zu erreichen, wird der Beitrag des Auspuffgeräusches im Innenraum 20 durch die Verwendung der Volumina beider Endschalldämpfer 15, 16 so gering wie möglich gehalten. Die Endschalldämpfer 15, 16 können dabei mittels eines beispielsweise durch eine Abgasklappe gebildeten Schaltorganes 18 in einer Verbindungsleitung 17 geschalten werden, wie in Fig. 3 dargestellt ist. Bei abschnittsweise sich abschnittsweise sich vereinigenden und wieder trennenden Abgassträngen 7, 8 können auch stromabwärts der Schalldämpfer Drosselorgane 18a, 18b angeordnet sein. Das Auspuffmündungsgeräusch kann somit durch Drosselung gedämpft werden. Dabei wird ein Teil des freien Querschnittes eines oder beider Abgasstränge 7, 8 versperrt. Durch den kleineren (für Volllast ausgelegten) Querschnitt sinkt das Auspuffmündungsgeräusch. Zusätzlich werden die Druckpulse im Einlassstrang 5, 6 mittels der schallleitenden Einrichtung 21, 22 verstärkt für die Generierung des Innengeräusches herangezogen. Dies ist möglich, da die einlassseitigen Druckpulse durch die elektronisch gesteuerte Zylinderabschaltung nur sehr gering beeinflusst werden. Dabei wird auch in der abgeschalteten Gruppe 3 von Zylindern 4 Luft durchgesetzt. Durch den Einsatz der schallleitenden Einrichtung 21, 22 wird das Einlassgeräusch in den Bereich der Spritzwand 23 bzw. in den Bereich des Innenraums 20 des Fahrzeug 19 geleitet und gegebenenfalls in gewissen Frequenzbereichen sogar verstärkt.

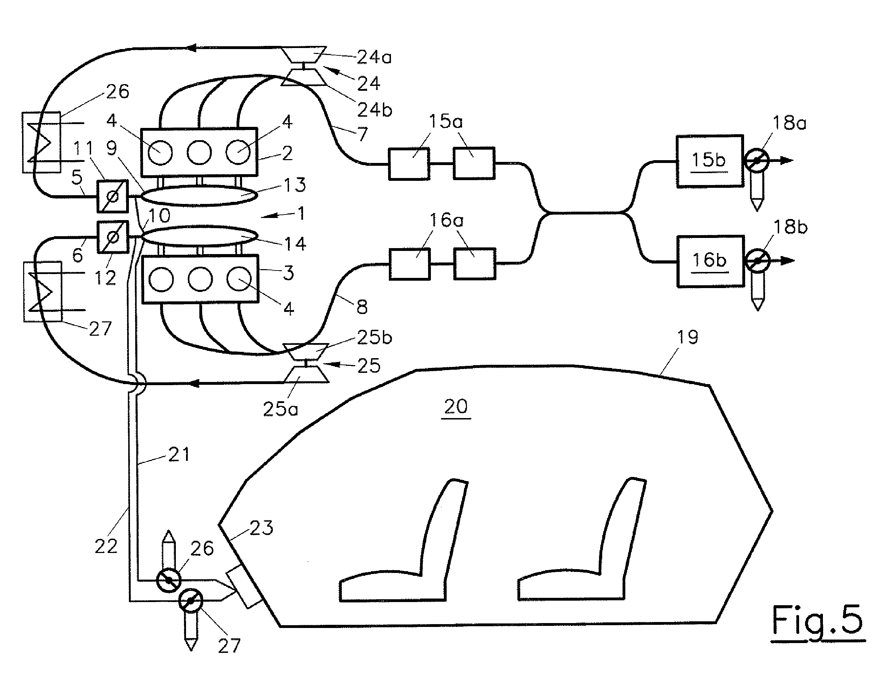

Die Fig. 4 und Fig. 5 zeigen Ausführungen der Erfindung mit jeweils einer aufgeladenen Brennkraftmaschine 1, wobei in jedem Einlassstrang 5a, 6a bzw. 5, 6 ein Verdichter 24a, 25a eines Abgasturboladers 24, 25 angeordnet ist. Die Abgasturbinen der Abgasturbolader 24, 25 sind mit Bezugszeichen 24b bzw. 25b bezeichnet. Bei aufgeladenen Brennkraftmaschinen 1 geht die schallleitende Einrichtung 21, 22 vom Hochdruckteil des Einlassstranges 5, 6 zwischen Verdichter 24, 25 und Einlasssammler 13, 14 aus. Auf diese Weise können auch bei aufgeladenen Brennkraftmaschinen 1 die Druckpulse im Einlassstrang 5, 6 optimal zur Generierung eines ansprechenden Geräusches im Innenraum 20 des Fahrzeuges 19 genutzt werden. In Fig. 4 vereinigen sich dabei die beiden Einlassstränge 5a, 6a stromabwärts von Ladeluftkühlern 26, 27 zu einem einzigen Einlassstrang 5, welcher in einen für beide Gruppen 2, 3 von Zylindern 4 gemeinsamen Einlasssammler 13 führt. Von der Ansaugmündung 9 des Einlasssammlers 13 geht eine zum Innenraum 20 des Fahrzeuges 19 führende schallleitende Einrichtung 21 aus. Bei der Ausführung nach Fig. 5 dagegen sind die beiden Einlassstränge 5, 6 auch stromabwärts der Ladeluftkühler 26, 27 vollkommen getrennt voneinander ausgeführt, wobei von jedem Einlassstrang 5, 6 eine schallleitende Einrichtung 21, 22 ausgeht.

## Patentansprüche

1. Brennkraftmaschine (1) mit zumindest zwei Zylindern (4) oder zumindest zwei Gruppen (2, 3) von Zylindern (4), von denen zumindest einer elektronisch deaktivierbar ist, mit zumindest einem Einlassstrang (5, 6) und zumindest einem Auslassstrang (7, 8), **dadurch gekennzeichnet, dass** zumindest ein Einlassstrang (5, 6) zumindest eines deaktivierten Zylinders (4) über zumindest eine schallleitende Einrichtung (21, 22) mit einem Innenraum (20) eines Fahrzeuges (19) akustisch verbindbar ist, wobei zumindest dieser Zylinder (4) der Brennkraftmaschine (1) ohne Deaktivierung der Ein- und Auslassventile deaktivierbar ist.

2. Brennkraftmaschine (1) nach Anspruch 1, **dadurch gekennzeichnet, dass** die schallleitende Einrichtung (21, 22) vom Bereich einer Ansaugmündung (9, 10) eines Einlasssammlers (13, 14) ausgeht.

3. Brennkraftmaschine (1) nach Anspruch 1 oder 2, **dadurch gekennzeichnet, dass** die schallleitende Einrichtung (21, 22) zwischen einer Drosselklappe (11, 12) und einem Einlasssammler (13, 14) vom Einlassstrang (5, 6) ausgeht.

4. Brennkraftmaschine (1) nach einem der Ansprüche 1 bis 3, **dadurch gekennzeichnet, dass** die schallleitende Einrichtung (21, 22) von einem stromabwärts eines Verdichters (24a, 25a) angeordneten Hochdruckteil des Einlassstranges (5, 6), vorzugsweise zwischen einem Ladeluftkühler (26, 27) und einem im Einlassstrang (5, 6) angeordneten Einlasssammler (13, 14), ausgeht.

5. Brennkraftmaschine (1) nach einem der Ansprüche 1 bis 4, **dadurch gekennzeichnet, dass** die schallleitende Einrichtung (21, 22) in den Innenraum (20) des Fahrzeugs (19) mündet.

6. Brennkraftmaschine (1) nach einem der Ansprüche 1 bis 5, **dadurch gekennzeichnet, dass** die schallleitende Einrichtung (21, 22) im Bereich einer an den Innenraum (20) des Fahrzeuges (19) grenzenden Wand, vorzugsweise im Bereich einer Spritzwand (23), endet.

7. Brennkraftmaschine (1) nach einem der Ansprüche 1 bis 6, **dadurch gekennzeichnet, dass** die schallleitende Einrichtung (21, 22) durch ein Schallrohr gebildet ist.

8. Brennkraftmaschine (1) nach einem der Ansprüche 1 bis 7, mit zumindest zwei Auslasssträngen (7, 8), **dadurch gekennzeichnet, dass** zumindest zwei Auslassstränge (7, 8) über zumindest ein Schaltorgan (18) miteinander strömungsverbindbar sind.

9. Brennkraftmaschine (1) nach einem der Ansprüche 1 bis 8, mit zumindest zwei Auslasssträngen (7, 8), **dadurch gekennzeichnet, dass** zumindest ein Auslassstrang (7, 8) zumindest ein Drosselorgan (18a, 18b) zur Reduzierung des Auslassquerschnittes aufweist.

10. Brennkraftmaschine (1) nach einem der Ansprüche 1 bis 9, **dadurch gekennzeichnet, dass** die schallleitende Einrichtung (21, 22) eine akustische Schalteinrichtung (26, 27) aufweist.

11. Verfahren zum Betreiben einer Brennkraftmaschine (1) mit zumindest zwei Zylindern (4) oder zumindest zwei Gruppen (2, 3) von Zylindern (4), von denen zumindest einer in zumindest einem Motorbetriebsbereich abgeschaltet wird, **dadurch gekennzeichnet, dass** zumindest während der Zylinderabschaltung zumindest ein Einlassstrang (5, 6) zumindest eines deaktivierten Zylinders (4) über eine schallleitende Einrichtung (21, 22) mit einem Innenraum (20) eines Fahrzeuges (19) akustisch verbunden wird, wobei während der Zylinderabschaltung die Einlassventile und Auslassventile des deaktivierten Zylinders (4) weiter motorbetriebsmäßig betätigt werden.

12. Verfahren nach Anspruch 11 , **dadurch gekennzeichnet, dass** der Innenraum (20) des Fahrzeuges (19) über die schallleitende Einrichtung (21, 22) vom Einlassstrang (5, 6) akustisch getrennt wird, sobald der zumindest eine deaktivierte Zylinder (4) wieder aktiviert wird.

13. Verfahren nach Anspruch 11 oder 12, wobei das Abgas zumindest zweier Zylinder (4) über zumindest zwei separate Auslassstränge (7, 8) emittiert wird, **dadurch gekennzeichnet, dass** während der Zylinderabschaltung die Auslassstränge (7, 8) über zumindest ein Schaltorgan (18) miteinander strömungsverbunden werden.

14. Verfahren nach einem der Ansprüche 11 bis 13, wobei das Abgas zumindest zweier Zylinder (4) über zumindest zwei separate Auslassstränge (7, 8) emittiert wird, **dadurch gekennzeichnet, dass** während der Zylinderabschaltung die Strömung in zumindest einem Auslassstränge (7, 8) über zumindest ein Drosselorgan (18a, 18b) gedrosselt wird.

## Claims

1. An internal combustion engine (1), comprising at least two cylinders (4) or at least two groups (2, 3) of cylinders (4), of which at least one can be deactivated electronically, and comprising at least one inlet strand (5, 6) and at least one outlet strand (7, 8), **characterised in that** at least one inlet strand (5, 6) of at least one deactivated cylinder (4) can acoustically be connected via at least one sound-conducting device (21, 22) to an interior space (20) of a vehicle (19), wherein at least this cylinder (4) of the internal combustion engine (1) can be deactivated without the deactivation of the inlet and exhaust valves.

2. An internal combustion engine (1) according to claim 1, **characterised in that** the sound-conducting device (21, 22) originates from the region of an intake orifice (9, 10) of an inlet collector (13, 14).

3. An internal combustion engine (1) according to claim 1 or 2, **characterised in that** the sound-conducting device (21, 22) originates from the inlet strand (5, 6) between a throttle valve (11, 12) and an inlet collector (13, 14).

4. An internal combustion engine (1) according to one of the claims 1 to 3, **characterised in that** the sound-conducting device (21, 22) originates from a high-pressure part of the inlet strand (5, 6) arranged downstream of a compressor (24a, 25a), preferably between a charge-air cooler (26, 27) and an inlet collector (13, 14) arranged in the inlet strand (5, 6).

5. An internal combustion engine (1) according to one of the claims 1 to 4, **characterised in that** the sound-conducting device (21, 22) opens into the interior space (20) of the vehicle (19).

6. An internal combustion engine (1) according to one of the claims 1 to 5, **characterised in that** the sound-conducting device (21, 22) ends in the region of a wall adjoining the interior space (20) of the vehicle (19), preferably in the region of a splashboard (23).

7. An internal combustion engine (1) according to one of the claims 1 to 6, **characterised in that** the sound-conducting device (21, 22) is formed by a soundpipe.

8. An internal combustion engine (1) according to one of the claims 1 to 7, comprising at least two outlet strands (7, 8), **characterised in that** at least two outlet strands (7, 8) can be flow-connected to each other via at least one switching member (18).

9. An internal combustion engine (1) according to one of the claims 1 to 8, comprising at least two outlet strands (7, 8), **characterised in that** at least one outlet strand (7, 8) comprises at least one throttling member (18a, 18b) for reducing the exhaust cross-section.

10. An internal combustion engine (1) according to one of the claims 1 to 9, **characterised in that** the sound-conducting device (21, 22) comprises an acoustic switching device (26, 27).

11. A method for operating an internal combustion engine (1), comprising at least two cylinders (4) or at least two groups (2, 3) of cylinders (4), of which at least one is deactivated in at least one engine operating range, **characterised in that** at least during the cylinder deactivation at least one inlet strand (5, 6) of at least one deactivated cylinder (4) is acoustically connected via a sound-conducting device (21, 22) to an interior space (20) of a vehicle (19), wherein during the cylinder deactivation the inlet valves and exhaust valves of the deactivated cylinder (4) are continued to be actuated in the manner of engine operation.

12. A method according to claim 11, **characterised in that** the interior space (20) of the vehicle (19) is acoustically separated from the inlet strand (5, 6) via the sound-conducting device (21, 22) once the at least one deactivated cylinder (4) is reactivated again.

13. A method according to claim 11 or 12, wherein the exhaust gas of at least two cylinders (4) is emitted via at least two separate outlet strands (7, 8), **characterised in that** during the cylinder deactivation the outlet strands (7, 8) are flow-connected to each other via at least one switching member (18).

14. A method according to one of the claims 11 to 13, wherein the exhaust gas of at least two cylinders (4) is emitted via at least two separate outlet strands (7, 8), **characterised in that** during the cylinder deactivation the flow in at least one outlet strand (7, 8) is throttled via at least one throttling member (18a, 18b).

## Revendications

1. Moteur à combustion interne (1) comportant au moins deux cylindres (4) ou au moins deux groupes (2, 3) de cylindres (4) dont au moins un peut être désactivé électroniquement, comprenant au moins une ligne d'admission (5, 6) et au moins une ligne d'échappement (7, 8),
**caractérisé en ce qu'**
au moins une ligne d'admission (5, 6) d'au moins un cylindre (4) désactivé peut être reliée de manière acoustique par l'intermédiaire d'au moins un dispositif de propagation du son (21, 22) avec l'habitacle (20) d'un véhicule (19), au moins ce cylindre (4) du moteur à combustion interne (1) pouvant être désactivé sans désactiver les soupapes d'admission et d'échappement.

2. Moteur à combustion interne (1) conforme à la revendication 1,
**caractérisé en ce que**
le dispositif de propagation du son (21, 22) part de la zone d'une embouchure d'aspiration (9, 10) d'un collecteur d'admission (13, 14).

3. Moteur à combustion interne (1) conforme à la revendication 1 ou 2,
**caractérisé en ce que**
le dispositif de propagation du son (21, 22) part de la ligne d'admission (5, 6) entre un clapet d'étranglement (11, 12) et un collecteur d'admission (13, 14).

4. Moteur à combustion interne (1) conforme à l'une des revendications 1 à 3,
**caractérisé en ce que**
le dispositif de propagation du son (21, 22) part d'une partie haute pression de la ligne d'admission (5, 6), située en aval d'un compresseur (24a, 25a) de préférence entre un organe de refroidissement de la charge (26, 27) et un collecteur d'admission (13, 14) monté dans la ligne d'admission (5, 6).

5. Moteur à combustion interne (1) conforme à l'une des revendications 1 à 4,
**caractérisé en ce que**
le dispositif de propagation du son (21, 22) débouche dans l'habitacle (20) du véhicule (19).

6. Moteur à combustion interne (1) conforme à l'une des revendications 1 à 5,
**caractérisé en ce que**
le dispositif de propagation du son (21, 22) se termine dans la zone d'une paroi limitant l'habitacle (20) du véhicule (19), de préférence dans la zone d'une paroi moulée par injection (23).

7. Moteur à combustion interne (1) conforme à l'une des revendications 1 à 6,
**caractérisé en ce que**
le dispositif de propagation du son (21, 22) est formé par un tube acoustique.

8. Moteur à combustion interne (1) conforme à l'une des revendications 1 à 7, comportant au moins deux lignes d'échappement (7, 8),
**caractérisé en ce qu'**
au moins deux lignes d'échappement (7, 8) peuvent être reliées hydrauliquement l'une à l'autre par au moins un organe de commutation (18).

9. Moteur à combustion interne (1) conforme à l'une des revendications 1 à 8, comprenant au moins deux lignes d'échappement (7, 8),
**caractérisé en ce qu'**
au moins une ligne d'échappement (7, 8) comporte au moins un organe d'étranglement (18a, 18b) pour permettre de réduire la section d'échappement.

10. Moteur à combustion interne (1) conforme à l'une des revendications 1 à 9,
**caractérisé en ce que**
le dispositif de propagation du son (21, 22) comporte un dispositif de commutation acoustique (26, 27).

11. Procédé de gestion d'un moteur à combustion interne (1) comportant au moins deux cylindres (4) ou au moins deux groupes (2, 3) de cylindres (4) dont au moins un peut être coupé dans au moins une plage de fonctionnement du moteur,
**caractérisé en ce qu'**
au moins pendant la coupure du cylindre au moins une ligne d'admission (5, 6) d'au moins un cylindre (4) désactivé est relié acoustiquement par l'intermédiaire d'un dispositif de propagation du son (21, 22) avec l'habitacle (20) du véhicule (19), pendant la coupure du cylindre les soupapes d'admission et les soupapes d'échappement du cylindre (4) désactivé continuant à être actionnées selon le fonctionnement du moteur.

12. Procédé conforme à la revendication 11,
**caractérisé en ce que**
l'habitacle (20) du véhicule (19) est séparé acoustiquement par l'intermédiaire du dispositif de propagation du son (21, 22) de la ligne d'admission (5, 6) dès que le cylindre (4) désactivé est à nouveau activé.

13. Procédé conforme à la revendication 11 ou 12, selon lequel les gaz d'échappement d'au moins deux cylindres (4) sont émis par l'intermédiaire d'au moins deux lignes d'échappement (7, 8) séparées,
**caractérisé en ce que**
pendant la coupure d'un cylindre les lignes d'échappement (7, 8) sont hydrauliquement reliées entre elles par l'intermédiaire d'au moins un organe de commutation (18).

14. Procédé conforme à l'une des revendications 11 à 13, selon lequel les gaz d'échappement d'au moins deux cylindres (4) sont émis par l'intermédiaire d'au moins deux lignes d'échappement (7, 8) séparées,
**caractérisé en ce que**
pendant la coupure d'un cylindre l'écoulement dans au moins une ligne d'échappement (7, 8) est étranglé par au moins un organe d'étranglement (18a, 18b).
